# EUROPÄISCHE PATENTSCHRIFT

(11) **EP 0 657 081 B1**
(45) Veröffentlichungstag und Bekanntmachung des Hinweises auf die Patenterteilung: **04.02.1998**
(21) Anmeldenummer: 93919075.7
(22) Anmeldetag: 17.08.1993
(51) Int. Cl.: H04Q 3/545

(54) **SWITCHING-CONTROL-SYSTEM ZUR STEUERUNG DER PHYSIKALISCHEN VERBINDUNGSSTRUKTUREN IN EINEM VERMITTLUNGSSYSTEM**
SWITCHING CONTROL SYSTEM FOR CONTROLLING PHYSICAL CONNECTION STRUCTURES IN A COMMUNICATIONS SYSTEM
SYSTEME DE COMMANDE A COMMUTATION PERMETTANT DE COMMANDER LES STRUCTURES PHYSIQUES DE LIAISON DANS UN SYSTEME DE COMMUNICATIONS

(30) Priorität: 25.08.1992 EP 92114475
(43) Veröffentlichungstag der Anmeldung: 14.06.1995
(73) Patentinhaber: SIEMENS AKTIENGESELLSCHAFT, 80333 München (DE); GPT LIMITED, Coventry, CV3 1HJ (GB)
(72) Erfinder: WILLE-FIER, Regina, D-82041 Deisenhofen (DE); CUTLER, John Wayne, Coventry CV3 1FX (GB)
(86) Internationale Anmeldenummer: EP9302191
(87) Internationale Veröffentlichungsnummer: WO9405120

(56) Entgegenhaltungen:
- INTERNATIONAL SWITCHING SYMPOSIUM 1990 Bd. 2 , Juni 1990 , STOCKHOLM SE Seiten 97 - 106 E. C. ARNOLD ET AL. 'Object Oriented Software Technologies Applied to Switching System Architectures and Software Development Processes'
- IEEE NETWORK: THE MAGAZINE OF COMPUTER COMMUNICATIONS Bd. 4, Nr. 6 , November 1990 , NEW YORK US Seiten 14 - 22 J. S. STACEY ET AL. 'Modeling Call Control for Distributed Applications in Telephony'
- EUROPEAN TRANSACTIONS ON TELECOMMUNICATIONS AND RELATED TECHNOLOGIES Bd. 2, Nr. 4 , August 1991 , MILANO IT Seiten 391 - 401 G. P. BALBONI ET AL. 'An ATM Switching Testbed'
- PROCEEDINGS OF THE NATIONAL COMMUNICATIONS FORUM Bd. 45 , Oktober 1991 , OAK BROOK, ILLINOIS US Seiten 185 - 193 S. CANNON 'Switch Architecture for the Intelligent Network'

## Beschreibung

Die Anwender-Software zur Steuerung der Verbindungen ist in heutigen Vermittlungssystemen noch in starkem Maße von der Hardware-Architektur des Vermittlungssystems abhängig.

Aus dem Artikel "Object Oriented Software Technologies Applied to Switching Architectures and Software Development Processes" von E. C. Arnold et al. aus dem "International Switching Symposium 1990, Bd. 2, Juni 1990, Stockholm SE, Seiten 97 - 106" ist eine Switching-Application-Software bekannt, die in mehrere Komponenten aufgeteilt ist. Die Komponenten repräsentieren dabei logische und physikalische Systementitäten. Die Komponente "Call" repräsentiert beispielsweise die Systementität "Call". Die Komponente "Call" steuert dabei die Systementität "Call" sowohl auf logischer Ebene als auch auf physikalischer Ebene (mit Ausnahme der lokalen physikalischen Verbindungssteuerung, die durch die lokalen Komponenten des Typs "Fabric" durchgeführt wird).

Aus dem Artikel "Switch Architecture for the Intelligent Network" von Steve Cannon aus den "Proceeding of the national communications forum, Bd. 45, Oktober 1991, Oak Brook, Illinois, US, Seiten 185 bis 193 ist eine geschichtete Switching-Controll-Architektur bekannt.

Der Erfindung liegt das Problem zugrunde, eine Entkopplung der Anwendersysteme von der Hardware-Architektur des Vermittlungssystems zu erzielen.

Dieses Problem wird durch die Lehre des Anspruchs 1 gelöst.

Aufgrund der Einführung des erfindungsgemäßen zentralen Switching-Control-Systems können die Anwendersysteme ihre Verbindungsanforderungen in einer Weise formulieren, die unabhängig von der Hardware-Architektur des Vermittlungssystems ist. Dadurch ist gewährleistet, daß die Anwendersysteme von der Hardware-Architektur des Vermittlungssystems unabhängig sind. Da die Ressourcen-Behandlung durch eigenständige Ressourcensysteme durchgeführt wird, ist eine feste Zuordnung des Switching-Control-Systems zu einem bestimmten zentralen Steuerungsprozessor nicht erforderlich.

Eine weitere Ausführungsform der Erfindung ist durch Anspruch 2 angegeben. Durch diese Ausführungsform wird die Unabhängigkeit des erfindungsgemäßen Switching-Control-Systems von der speziellen Struktur eines Anwendersystems noch erhöht.

Eine weitere Ausführungsform der Erfindung ist durch Anspruch 3 angegeben. Bei dieser Ausführungsform der Erfindung benötigt das Switching-Control-System keine Mittel zum Speichern der pfadbezogenen Daten von bestehenden Verbindungen.

Das Vermittlungssystem gemäß Anspruch 4 besitzt insbesondere den Vorteil, daß die Anwendersysteme vom Switching-Control-System entkoppelt sind. Dadurch ist gewährleistet, daß die Anwendersysteme von der physikalischen Verbindungsstruktur und damit von der Architektur der Koppeleinrichtungen unabhängig sind. Des weiteren ist bei dem Vermittlungssystem gemäß Anspruch 4 das Switching-Control-System wiederum unabhängig von den peripheren Ressourcensystemen zur Steuerung der physikalischen Ressourcen des Vermittlungssystems.

Das Vermittlungssystem gemäß Anspruch 5 hat insbesondere den Vorteil, daß die Modularität der Anwendersysteme erhöht ist.

Eine weitere Ausführungsform der Erfindung ist durch Anspruch 6 gegeben. Zum einen wird durch die Verteilbarkeit der Call-Kette über mehrere Steuerungsprozessoren eine bessere Verteilbarkeit der Datenbasis ermöglicht, zum anderen wird es dadurch ermöglicht, diejenigen Funktionen der Verbindungssteuerungen, die vom Typ der Signalisierung eines an der Verbindung beteiligten Verbindungsendpunktes abhängen, auf demjenigen Steuerungsprozessor abzuhandeln, der für die Steuerung dieses Verbindungsendpunktes zuständig ist. Dadurch wird eine bessere Dynamik und damit Effektivität des modularisierten Anwendersystems erzielt.

Eine weitere Ausführungsform der Erfindung gemäß Anspruch 7 besitzt insbesondere den Vorteil, daß dadurch die Modularisierbarkeit des Anwendersystems erhöht wird und gleichzeitig der Kommunikationsaufwand zur Durchführungs der Verbindungssteuerung gering gehalten wird.

Es folgt eine Figurenliste der Zeichnung.
- FIG 1: zeigt die Struktur eines ATM-Vermittlungssystems,
- FIG 2: zeigt den modularen Aufbau des Call-Processing-Systems,
- FIG 3: zeigt Beispiele für den Aufbau einer path envelope,
- FIG 4: zeigt den Aufbau einer path envelope nach der Ausführung einer disconnect-Anforderung,
- FIG 5: zeigt den Nachrichtenfluß zwischen Call-Processing-system und Switching-Control-System bei einer einfachen Verbindungsanforderung,
- FIG 6: zeigt den Nachrichtenfluß zwischen Call-Processing-System und Switching-Control-System bei einer kombinierten Verbindungsanforderung, und
- FIG 7: zeigt den durch die Nachrichtenflüsse von FIG 6 aufgebauten Pfad der Verbindung.

Im folgenden wird ein Ausführungsbeispiel der Erfindung anhand der Zeichnung näher erläutert.

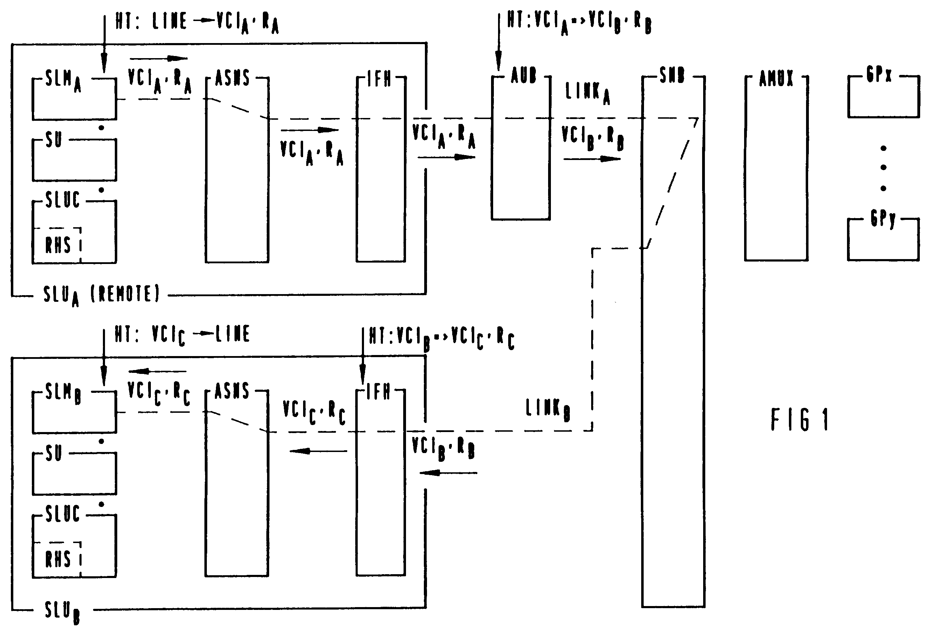

FIG 1 zeigt die Struktur eines ATM-Vermittlungssystems.

Die prinzipiellen Switching-Funktionen zum Aufbau von ATModer STM-Verbindungen sind vergleichbar. So wird beispielsweise auch für eine ATM-Verbindung ein Pfad durch die betroffenen Koppeleinrichtungen bestimmt, bevor der tatsächliche Datentransfer beginnt. Alle Zellen einer ATM-Verbindung werden über diesen Pfad übertragen. Im allgemeinen werden sich mehrere Verbindungen einen ATM-Link teilen. ATM-Zellen, die zu derselben Verbindung gehören, wird dieselbe VCI/VPI-Kennung (virtual connection/path identifier) im Zellenheader zugeordnet.

Ein ausgewählter Pfad muß für alle Links, die eine Verkehrskonzentration bewirken, in Software-Verzeichnissen reserviert werden, um eine Überlast auf den ATM-Links zu verhindern.

Die Anzahl der Zellen, die in einem bestimmten Zeitintervall übertragen werden, definiert die Bandbreite, die durch eine bestimmte ATM-Verbindung auf einem Link beansprucht wird. Die zugeordnete Bandbreite wird durch eine Benutzer-/Netz-Schnittstelle verbindungsindividuell überwacht, um ein nicht autorisiertes Überfluten der Koppeleinrichtungen durch einen bestimmten Anwender (policing) zu verhindern. Das genannte Software-Verzeichnis wird durch ein Software-Ressourcensystem RHS verwaltet, das in einer Steuereinheit SLUC einer Teilnehmereinheit SLU implementiert ist.

Die VCI/VPI-Kennung, die einer bestimmten ATM-Verbindung zugeordnet ist und die in FIG 1 mit der Bezeichnung VCI abgekürzt ist, ist immer für einen bestimmten Link gültig. Bevor die ATM-Zellen auf einem anderen Link weiterübertragen werden, wird im Header einer ATM-Zelle eine neue VCI/VPI-Kennung eingetragen (Header-Übersetzung HT). Diese Header-Übersetzung findet ebenfalls an der nicht dargestellten Benutzer/Netz-Schnittstelle statt.

Die Header-Übersetzung wird außerdem vor jeder Koppeleinrichtung durchgeführt. In diesem Fall wird einer ATM-Zelle gleichzeitig mit dem Eintragen einer neuen VCI/VPI-Kennung eine Routing- Kennung R angefügt, die den festgelegten Pfad durch die folgende Koppeleinrichtung beschreibt. Die Routing-Kennung R wird innerhalb der folgenden Koppeleinrichtung ausgewertet, um die Zelle zu dem richtigen abgehenden Link durchzusteuern. Für einen virtuellen Pfad wird in der Schnittstellenschaltung IFH bzw. in der Zugangseinrichtung AU (bei einer entfernten SLU) nur die VPI-Kennung neu berechnet, während die VCI-Kennung, die einzelnen Verbindungen zugeordnet ist, unverändert bleibt. Alle Zellen mit derselben VPI-Kennung erhalten somit dieselben Routing-Kennungen, wodurch es ermöglicht wird, mehrere virtuelle Verbindungen auf transparente Weise über denselben virtuellen Pfad zu schalten.

In FIG 1 ist die Header-Übersetzung für eine virtuelle ATM-Verbindung über die Hauptkoppeleinrichtung SNB gezeigt. Als virtuelle ATM-Verbindung ist eine Einweg-Verbindung von einer Teilnehmeranschlußeinheit SLU_{A} zu einer Teilnehmeranschlußeinheit SLU_{B} dargestellt. Im folgenden werden die für eine ATM-Zelle durchgeführten Header-Übersetzungen näher beschrieben.

Die erste Header-Übersetzung HT wird durch das Teilnehmermodul SLM_{A} durchgeführt. In diesem Teilnehmermodul werden die Routing-Kennungen R_{A} für den Pfad durch das lokale Koppelnetz ASNS der Teilnehmereinheit SLU_{A} den ATM-Zellen zugefügt und die VCI_{A}-Kennung wird in den Header der ATM-Zellen eingetragen.

Die zweite Header-Übersetzung für die zentrale Koppeleinrichtung SNB wird durch die Breitbandzugangseinrichtung AUB bewirkt. In dieser Breitbandzugangseinrichtung erhalten alle ankommenden Zellen mit der Pfadkennung VCI_{A} eine neue Pfadkennung VCI_{B} und eine neue Routing-Kennung R_{B} für den Pfad durch die Hauptkoppeleinrichtung SNB.

Die dritte und letzte Header-Übersetzung wird in der Teilnehmereinheit SLU_{B} der B-Seite in der IFH durchgeführt. Dort erhalten alle ankommenden Zellen mit der Pfadkennung VCI_{B} eine neue Pfadkennung VCI_{C}, sowie neue Routing-Kennungen R_{C} für den Pfad durch die lokale Koppeleinrichtung ASNS der Teilnehmereinheit SLU_{B}.

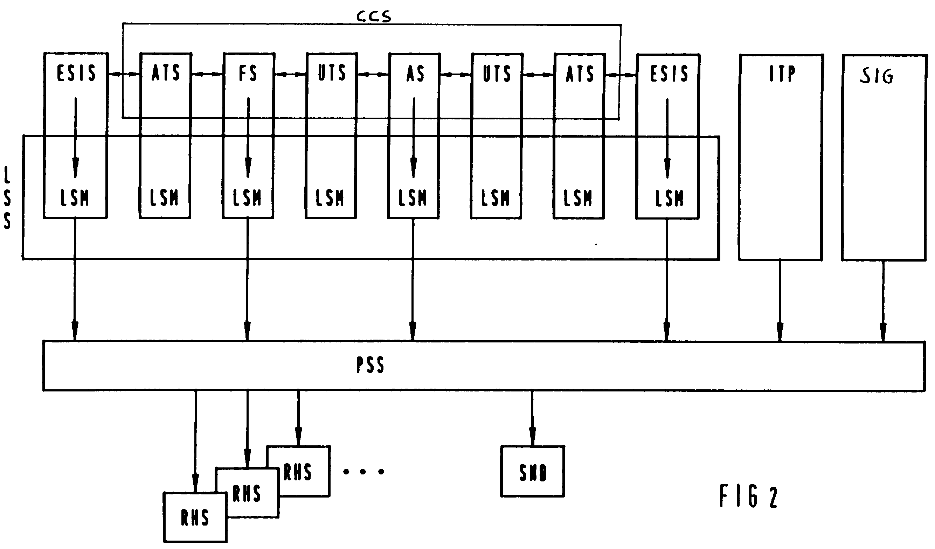

FIG 2 zeigt die funktionale Zusammensetzung eines speziellen Anwendersystems, nämlich des Call-Processing-Systems zur Steuerung von Nutzverbindungen (Calls) sowie dessen Einordnung bezüglich weiterer Software-Systeme zu Steuerung von Verbindungen (connection) innerhalb eines Vermittlungssystems.

Das Call-Processing-System umfaßt ein Call-Control-System CCS zur Steuerung einer Verbindung auf logischer Ebene, ein Schnittstellen-System ESIS zur Abschirmung des Call-Control-Systems von verschiedenen Signalisierungsvarianten und ein Koordinierungssystem LSS zur Koordinierung der von dem Call-Control-System erzeugten logischen Verbindungsanforderungen gegenüber einem Switching-Control-System PSS. Das Schnittstellensystem ESIS und das Call-Control-System CCS wird im folgenden zusammenfassend auch als Call-Connection-System bezeichnet.

Auf der gleichen Ebene wie das Call-Processing-System sind des weiteren ein Processing-System ITP zur Systemadministration und ein Processing-System SIG zur Signalisierungsadministration dargestellt. Diese Processing-Systeme enthalten, wie das Call-Processing-System, Connection-Systeme, die sich in gleicher Weise an das Switching-Control-System PSS wenden, um ihre logischen Verbindungswünsche auf physikalischer Ebene zu realisieren.

FIG 2 zeigt des weiteren in der untersten Ebene ein Ressourcen-System RHS zur Steuerung der Ressourcen des Vermittlungssystems und die Hauptkoppeleinrichtung SNB, die als einzige Ressource des Vermittlungssystems in direkter Weise vom Switching-Control-System gesteuert wird.

Im folgenden wird das Call-Processing-System näher beschrieben.

Das ESIS bewirkt die Abschirmung des Call-Control-Systems CCS von verschiedenen Signalisierungsvarianten, indem es die verschiedenen Signalisierungsschemata in eine allgemeine Nachrichtenschnittstelle zwischen ESIS und CCS umwandelt. Die Struktur des ESIS ist streng modular mit separaten Softwaresegmenten für jedes unterstützte Signalisierungssystem bzw. jede Variante davon. Durch diese Segmente werden im Zusammenhang mit einer Verbindung entsprechende Instanzen erzeugt oder entfernt, je nachdem, welche verbindungsspezifischen Signalisierungsanforderungen auftreten. Das Call-Control-System CCS sieht jedoch trotz der unterschiedlichen Signalisierungsanforderungen immer eine allgemeine Nachrichtenschnittstelle zum ESIS.

Das ESIS ist außerdem zuständig für den verbindungsbezogenen Signalisierungsaustausch zwischen verschiedenen Signalisierungssystemen.

Das Call-Control-System CCS dient der Steuerung der Verbindung auf logischer Ebene. Seine Aufgaben beinhalten die Verkehrslenkung, den standardmäßigen Verbindungsauf- bzw. -abbau, Behandlung von Leistungsmerkmalen, Benachrichtigen des Gebührensystems und des Statistiksystems über call events, usw. Das Aufgabengebiet des CCS schließt die Steuerung des physikalischen Verbindungsauf- bzw. -abbaus nicht ein. Dieser wird zwar durch das CCS initialisiert, jedoch durch das Switching-Control-System PSS gesteuert.

Das CCS umfaßt zwei Typen von Software-Einheiten, nämlich statische Einheiten (Manager) und transiente Einheiten, die als Call-Segmente bezeichnet werden. Die genannten Call-Segmente erzeugen pro Verbindung eine Reihe von Instanzen (Prozeß- oder Dateninstanzen), die untereinander über eine gemeinsame Nachrichtenschnittstelle kommunizieren. Im folgenden werden die genannten Instanzen auch als Segmente bezeichnet und die kommunizierende Reihe von Instanzen auch als Call-Kette.

Unter den Call-Segmenten gibt es Access-Segmente ATS, die die technischen Merkmale des betreffenden Ports repräsentieren, Anwender-Segmente UTS, die die Leistungsmerkmale des Anwenders repräsentieren, Verknüpfungs-Segmente AS (Associater Segments) die die Verknüpfung der A- und B-Seite repräsentieren und Feature-Segmente FS, die nicht standardmäßige Merkmale einer Verbindung, d. h. individuelle Merkmale repräsentieren. Die genannten Call-Segmente werden für eine Verbindung in Abhängigkeit von verbindungsspezifischen Anreizsignalen und Teilnehmer/Netz-Merkmalen erzeugt oder entfernt.

Das Koordinierungssystem LSS koordiniert Verbindungsanforderungen, die von verschiedenen Call-Segmenten und ESIS-Segmenten herrühren. Hierzu muß das Koordinierungssystem die von einem Segment erhaltenen Verbindungsanforderungen zwischenspeichern. Dies geschieht in einem pro Segment zugeordneten Koordinierungsmodul LSM. Jedes Mal, wenn ein Koordinierungsmodul eine neue Verbindungsanforderung von einem Segment empfängt, wird der Zustand des Koordinierungsmoduls ausgewertet und aufdatiert. Durch einen verteilten Kontrollmechanismus zwischen den Koordinierungsmoduln wird gewährleistet, daß das Koordinierungssystem zu einer konsistenten physikalischen Verbindungsanforderung gegenüber dem Switching-Control-System PSS gelangt. Gemäß diesem Kontrollmechanismus wird die Kontrolle über einen aktiven Port zu einem bestimmten Zeitpunkt immer genau einem Koordinierungsmodul des Koordinierungssystems zugeordnet. Wenn ein Koordinierungsmodul die genannte Kontrolle über einen Port inne hat, kann es für diesen Port Verbindungsanforderungen an das Switching-Control-System stellen.

Wenn ein Segment eine Verbindungsanforderung für einen Port stellt, über den sein ihm zugeordnetes Koordinierungsmodul zu diesem Zeitpunkt keine Kontrolle hat, gibt es drei Alternativen:
- 1. Alternative:: Das Koordinierungsmodul ist berechtigt, die Kontrolle über den Port (Verbindungsendpunkt) von einem anderen Koordinierungsmodul anzufordern,
- 2. Alternative:: Das Koordinierungsmodul muß warten, bis ein anderen Koordinierungsmodul die Kontrolle über den Port freigibt,
- 3. Alternative:: Das Koordinierungsmodul ist berechtigt, die Anforderung einem anderen Koordinierungsmodul zu übergeben, das die Kontrolle über den Port erlangen kann.

Die Auswahl einer der genannten Alternativen erfolgt nach Prioritätsregeln, die mit den Prioritätsregeln für die Segmente des ESIS-/CCS-Systems übereinstimmen. Bei diesem System besitzen Segmente, die näher an der Signalisierungsquelle (aktiver Port) liegen, Priorität für Signale, die auf ihrer Verbindungsseite entstehen. Analog dazu besitzen beim Koordinierungssystem diejenigen Koordinierungsmoduln, die innerhalb der Call-Kette der Signalisierungsquelle am nähesten liegen, die höchste Priorität für die Kontrolle des aktiven Ports ihrer Verbindungsseite. Dies bedeutet, daß Verbindungsanforderungen von weiter entfernt liegenden und damit weniger priorisierten Segmenten gegenüber solchen, die näher am aktiven Port liegen, nachgestellt werden. Nachgestellte Verbindungsanforderungen werden im Koordinierungsmodul des anfordernden Segments gespeichert und werden aktiv, sobald das höher priorisierte Segment die Kontrolle über den aktiven Port freigibt.

Eine detailliertere Beschreibung des Call-Control-Systems und des Koordinierungssystems ist in der mit der vorliegenden Anmeldung gleichzeitig eingereichten europäischen Anmeldung mit dem Titel "Koordinierungssystem zur Koordinierung von Verbindungsanforderungen" enthalten, die dieser Anmeldung als Anlage beiliegt.

In folgenden wird das erfindungsgemäße Switching-Control-System näher beschrieben.

Das Switching-Control-System ist ein grundlegendes Service-System für alle Anwendersysteme des Vermittlungssystems, die Verbindungen innerhalb des Vermittlungssystems anfordern. Außer einfachen Verbindungsansforderungen behandelt das Switching-Control-System auch spezielle Verbindungsanforderungen für die Rekonfiguration von für die Anwendersysteme aufgebauten Verbindungen.

Das Switching-Control-System erzeugt pro Verbindungsanforderung jeweils eine eigenständige Instanz. Dadurch sind die Schnittstellen zum Ressourcensystem und zur Hauptkoppeleinrichtung (z. B. Empfang von Rückmeldungen des Ressourcensystems oder der Hauptkoppeleinrichtung) von dem Zustand der Instanzen des Anwendersystems unabhängig.

Das Koordinierungssystem transformiert die private Sichtweise einer Verbindung, die den Segmenten (Instanzen) des Call-Control-Systems und des ESIS-Systems zu eigen ist, in eine einzige konsistente Verbindungsanforderung gegenüber dem Switching-Control-System. Aus diesem Grund darf das Switching-Control-System PSS Verbindungsaufträge von dem Koordinierungssystem in unbedingter Weise ausführen. Die einzigen Gründe für eine negative Rückmeldung zum Koordinierungssystem sind Blockierungsbedingungen der Steuerungen der Koppeleinrichtungen (z. B. eine negative Rückmeldung vom Ressourcensystem RHS) oder Fehler in den Koppeleinrichtungen selbst (z. B. eine negative Rückmeldung von einzelnen Koppeleinrichtungen).

Jede Verbindungsanforderung an das Switching-Control-System ruft eine neue Transaktion des Switching-Control-Systems hervor. Eine solche Transaktion umfaßt die Steuerung der beteiligten Ressourcensysteme des Vermittlungssystems und somit die Koordinierung des Aufbaus eines physikalischen Pfades durch die Koppeleinrichtungen des Vermittlungssystems.

Da die eigentliche Ressourcenbehandlung (Pfadressourcen und Serviceeinheit-Ressourcen) vom Switching-Control-System getrennt ist und durch von diesem unabhängige Ressourcensysteme durchgeführt wird, erfordert das Switching-Control-System keine Zuordnung zu einem bestimmten Steuerungsprozessor der zentralen Steuerungsprozessoren GPₓ,..., GP_{y} (siehe FIG 1). Darüber hinaus gibt es keine Einschränkung dahingehend, daß Verbindungsanforderungen, die derselben Call-Kette entspringen, sich an dieselbe Instanz des PSS wenden müssen. Dies erlaubt eine sehr effektive Implementation der Funktionen des Switching-Control-Systems innerhalb des Hardware-Systems. Jeder zentrale Steuerungsprozessor kann somit mehrere Instanzen des Switching-Control-Systems parallel bedienen. Dadurch kann ein Anwendersystem seine Verbindungsanforderungen immer an ein Switching-Control-System seines eigenen zentralen Steuerungsprozessors stellen. Da das Switching-Control-System auf Bestätigungen von dem Ressourcensystem oder der Hauptkoppeleinrichtung wartet, ist es möglich, eine parallele Ausführung der Verbindungsanforderungen für unterschiedliche Verbindungen auf einem einzigen zentralen Steuerungsprozessor durchzuführen. Hierzu muß ein bestimmbestimmter Instanziierungsmechanismus pro zentraler Steuerungsprozessor zur Verfügung gestellt werden (z. B. Prozeßinstanziierung oder Dateninstanziierung).

Ressourcen, die einer Verbindung zugeordnet sind, müssen während der Dauer einer Verbindung verbindungsindividuell gespeichert werden, um die Verbindung am Ende abbauen zu können. Wenn diese Daten im Switching-Control-System gespeichert würden, müßte dieses wesentlich komplexer aufgebaut sein, z.B. würde es pro Verbindung jeweils eine PSS-Instanz für die gesamte Dauer der Verbindung geben, was eine zusätzliche state/event-Kopplung innerhalb des Switching-Control-Systems erfordern würde und darüber hinaus neue Uberprüfungen der Konsistenz der Verbindungsanforderungen zwischen dem Switching-Control-System und den Anwendersystemen. Um diese vergrößerte Komplexität zu vermeiden, werden die Verbindungsdaten innerhalb des Anwendersystems gespeichert. Beispielsweise werden die Verbindungsdaten für das Call-Processing-System in zu dem Koordinierungssystem zugehörigen Datenfeldern gespeichert. Zur Realisierung dieses Konzepts wird eine sog."path envelope" zwischen dem Anwendersystem und dem Switching-Control-System hin- und hergereicht, die die aktuellen Verbindungsdaten (Pfaddaten und sonstige Ressourcendaten) enthalten. Während die path envelope für das Anwendersystem eine black box darstellt, wird der Inhalt dieser path envelope durch das Switching-Control-System ausgewertet, um eine optimierte Pfadsuche für die Verbindungsanforderungen durchzuführen.

Das Switching-Control-System stellt somit eine eigenständige Schnittstelle zum Ressourcensystem dar, die es dem Call-Processing-System erlaubt, kombinierte Verbindungsanforderungen, die eine Ressourcenbehandlung und ein switching beinhalten, in einer einzigen Verbindungsanforderung an das Switching-Control-System zu stellen. Das Switching-Control-System sorgt indessen für die Koordination der Durchführung der kombinierten Verbindungsanforderung.

Grundsätzlich können zwei Typen von Nachrichten zwischen dem Anwendersystem und dem Switching-Control-System unterschieden werden: Ein erster Typ von Nachricht, der eine einfache Verbindungsanforderung für zwei ports repräsentiert, und ein zweiter Typ von Nachricht, der eine Anforderung zur Auswahl einer SU-Ressource (z.B. Ansage, Brücke) und zu deren Verbindung zu einem bestimmten port darstellt (kombinierte Verbindungsanforderung).

Aufgrund einer Verbindungsanforderung des ersten Typs bestimmt das Switching-Control-System die von der Anforderung betroffenen Koppeleinrichtungen und koordiniert den Aufbau des Pfades. Wenn zwei Teilnehmereinheiten SLU von der Verbindungsanforderung betroffen sind, sendet das Switching-Control-System zuerst Verbindungsaufträge zu den Ressourcensystemen auf beiden Teilnehmereinheitensteuerungen SLUC, um einen lokalen Pfad auszuwählen und diesen zur Hauptkoppeleinrichtung zu verbinden. Ist dies geschehen, so geben die beiden Ressourcensysteme dem Switching-Control-System die zur Hauptkoppeleinrichtung führenden, ausgewählten Links zurück. Sobald das Switching-Control-System diese Rückmeldung erhält, kann es die ausgewählten Links über die Hauptkoppeleinrichtung miteinander verbinden.

Eine Verbindungsanforderung des zweiten Typs umfaßt die Angabe eines Ressourcentyps und des Teilnehmers/trunks, der mit der Ressource verbunden werden soll. In diesem Fall umfaßt die Aufgabe des Switching-Control-Systems auch die Auswahl einer geeigneten Koppeleinrichtung, um die Verbindung mit der angeforderten Ressource bereitzustellen. Wenn die angeforderte Ressource in derselben Teilnehmereinheit verfügbar ist, in der sich auch der angegebene Teilnehmer/ trunk befindet, so sendet das Switching-Control-System ein Kommando zu dem Ressourcensystem RHS auf der Steuerung SLUC dieser Teilnehmereinheit, um eine geeignete Ressource auszuwählen, einen geeigneten Pfad durch die Koppeleinrichtung der Teilnehmereinheit zu finden und die entsprechenden routing-Daten zu den Moduln, die die header-Übersetzung bewirken, zu senden. Wenn der angeforderte Ressourcentyp nur im zentralen Ressourcenpool verfügbar ist, muß das Switching-Control-System auch für eine Verbindung über die Hauptkoppeleinrichtung sorgen. Für beide Typen von Verbindungsanforderungen (einfache Verbindungsanforderung und kombinierte Verbindungsanforderung) werden Daten über zugeordnete Ressourcen vom Ressourcensystem zum Switching-Control-System zurückgegeben und dort in der path envelope abgespeichert, um einen später stattfindenden Verbindungsabbau zu ermöglichen.

Für den Aufbau des physikalischen Pfades wertet das Switching-Control-System die vom Koordinierungssystem übergebenen port-Adressen aus und bestimmt daraus die Anzahl und den Typ der Koppeleinrichtungen, die von der angeforderten Verbindung betroffen sind. Bevor der Pfad durch die Hauptkoppeleinrichtung bestimmt werden kann, müssen die zur Hauptkoppeleinrichtung ankommenden Links bekannt sein. Deshalb fordert das Switching-Control-System vom Ressourcensystem zunächst den Pfad durch die lokalen Koppeleinrichtungen an, bevor es den Pfad durch die Hauptkoppeleinrichtung anfordert.

Die erste Verbindungsanforderung des Switching-Control-Systems an das Ressourcensystem RHS einer Teilnehmereinheit SLU zur Festlegung eines lokalen Pfades beinhaltet die Angabe eines Teilnehmerports und die Anforderung einer Verbindung zur Hauptkoppeleinrichtung bereitzustellen. Das Ressourcensystem der Teilnehmereinheit bewerkstelligt daraufhin die interne Pfadsuche, wählt einen Link und eine VCI-VPI-Nummer zum Hauptkoppelnetz aus und sendet die dazu entsprechenden Routingdaten zu den Moduln, die die Header-Übersetzung durchführen. Der ausgewählte Link und die VCI/VPT-Kennung werden dem Switching-Control-System zurückgegeben.

Das Switching-Control-System kann nun den Pfad durch die Hauptkoppeleinrichtung bestimmen. Zu diesem Zweck besitzt das Switching-Control-System eine Link-Tabelle, die die Verbindungen auf den Links zwischen den Teilnehmereinheiten und der Hauptkoppeleinrichtung beschreibt. Diese Link-Tabelle beschreibt zusätzlich auch Verbindungen auf Links zwischen Multiplexern AMUX und Hauptkoppeleinrichtung sowie Zugangseinrichtungen AUB von entfernten Teilnehmereinheiten und Hauptkoppeleinrichtung, so daß das Switching-Control-System weiß, daß zusätzliche Routing Kennungen für den Pfad zur bzw. von der Hauptkoppeleinrichtung gesetzt werden müssen. Um den Pfad in der Hauptkoppeleinrichtung aufzubauen, sendet das Switching-Control-System entsprechende Verbindungsaufträge zu den Moduln, die die header-Übersetzung für die Hauptkoppeleinrichtung bewirken. Diese Moduln befinden sich bei einer entfernten Teilnehmereinheit in der Zugangseinrichtung AUB, während sie bei einer lokalen Teilnehmereinheit in der Schnittstellenschaltung IFH dieser Teilnehmereinheit realisiert sind.

Das Switching-Control-System führt für das Call-Processing-System auch die Koordination der Behandlung der Ressourcen durch. In diesem Fall wählt das Switching-Control-System aus einem Pool die geeignete angeforderte Ressource aus. Hierzu besitzt das Switching-Control-System eine Ressourcen-Tabelle, die administrative Daten über den Typ und den Ort der Ressourcen beinhaltet, mit denen jede Teilnehmereinheit ausgerüstet ist oder die in einem zentralen Pool enthalten sind. Im allgemeinen gibt es eine Präferenz bei der Auswahl einer Ressource, da es z.B. ökonomischer ist, die Resourcen lokal, d.h. in der Teilnehmereinheit auszuwählen, als aus einem zentralen Pool.

Wenn eine Teilnehmereinheit und damit eine bestimmte Koppeleinrichtung bestimmt worden ist, über die die Ressource angeschaltet werden kann, koordiniert das Switching-Control-System die Zuordnung und die Verbindung dieser Ressource zu dem gewünschten Teilnehmer/-Trunk-Port.

Dies geschieht dadurch, daß eine kombinierte Zuweisungs/ Verbindungs-Anforderung an das Ressourcensystem dieser Teilnehmereinheit gesandt wird. Das Ressourcensystem wählt daraufhin eine geeignete Ressource der SU aus, führt eine Pfadsuche durch die Koppeleinrichtung der Teilnehmereinheit durch und verbindet die Ressource mit dem Teilnehmer/ Trunk. Wenn die Ressource nur im zentralen Pool verfügbar ist, muß das Switching-Control-System auch für eine Verbindung über die Hauptkoppeleinrichtung sorgen.

Die Ressourcen-Tabelle des Switching-Control-Systems enthält keine transiente Belegt/Frei-Information. Deshalb ist es möglich, daß alle Ressourcen eines bestimmten Typs in einem belegten Zustand angetroffen werden, wenn das Ressourcensystem auf sie zugreifen will. In diesem Fall versucht das Switching-Control-System, die Verbindungsanforderung mit einem anderen Ressourcensystem durchzuführen, oder es gibt eine negative Quittung an das Anwendersystem zurück.

Eine eingerichtete Verbindung muß gespeichert werden, damit sie später wieder abgebaut werden kann. Zu diesem Zweck wird eine sogenannte "path envelope" zwischen dem die Verbindung anfordernden Anwendersystem und dem Switching-Control-System übergeben. In dieser path envelope wird der Pfad in Form von über die beteiligten Koppeleinrichtungen verketteten Pfadsegmenten abgespeichert. Während das Switching-Control-System den Inhalt der path envelope auswertet, ist diese für das Anwendersystem bzw. genauer gesagt das Koordinierungssystem, das die path envelope während der stabilen Zeit der Verbindung speichert, völlig transparent.

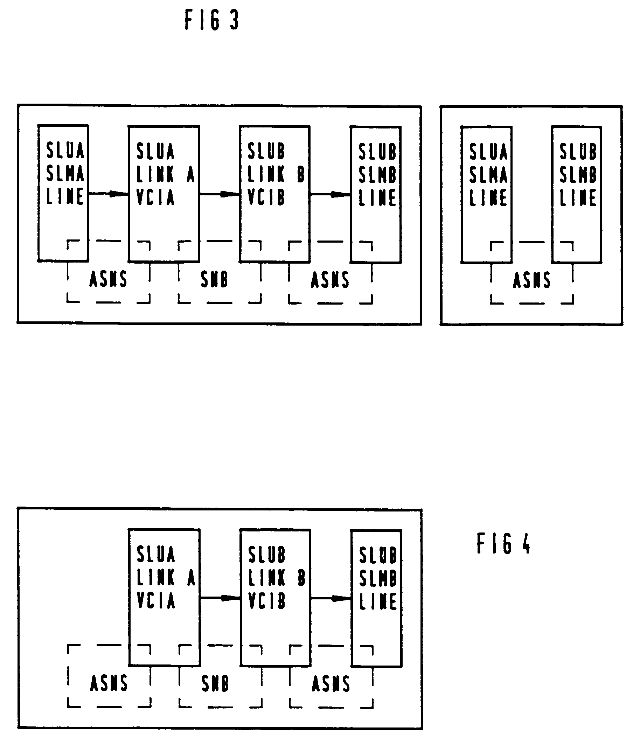

FIG 3 zeigt die in einer path envelope abgespeicherten Pfaddaten für eine ATM-Verbindung, die über die Hauptkoppeleinrichtung verläuft und des weiteren für eine ATM-Verbindung, die sich innerhalb einer Teilnehmereinheit abspielt. Aus Gründen der Einfachheit ist die VPI-Kennung dort nicht angegeben. Der Begriff "line" bedeutet im Falle eines Breitbandanschlusses die Port-Kennung und eine VCI/VPI-Kennung.

Das Switching-Control-System baut zur Durchführung einer Verbindungsanforderung jeweils die path envelope auf und gibt diese nach Ausführung der Verbindungsanforderung dem Anwendersystem zurück. Das Anwendersystem gibt nun seinerseits die path envelope dem Switching-Control-System für jeden neuen Verbindungssteuerungsvorgang wieder zurück, z.B. für jede Anforderung zum Verbindungsabbau, zur Verbindungsunterbrechung oder zur Verbindungsrekonfiguration (z.B. eine Verbindung auf Halten legen). In diesen Fällen wertet das Switching-Control-System die path envelope erneut aus, um eine der genannten Verbindungsanforderungen auszuführen. Um eine flexible Pfadbehandlung für die genannten Verbindungsanforderungen, insbesondere die komplexe Rekonfigurationsanforderung zu gewährleisten, stellt das Switching-Control-System dem Koordinierungssystem zwei Funktionen zur Verfügung, nämlich eine release-Funktion und eine disconnect-Funktion, die durch die Anforderungen "release" bzw. "disconnect" ausgelöst werden.

Aufgrund der release-Anforderung, mit der gleichzeitig die path envelope dem Switching-Control-System übergeben wird, wird der komplette Pfad abgebaut. Das Switching-Control-System beauftragt hierbei das Ressourcensystem, alle der Verbindung zugeordneten Ressourcen in den Service-Einheiten SU freizugeben und lokale Pfade abzubauen. Das Switching-Control-System veranlaßt darüber hinaus auch den Abbau der Pfade über die Hauptkoppeleinrichtung, indem es entsprechende Kommandos zu den Moduln der Hauptkoppeleinrichtung, die die header-Übersetzung bewirken, sendet.

Aufgrund der disconnect-Anforderung, mit der ebenfalls gleichzeitig die path envelope an das Switching-Control-System übergeben wird, wird die Pfad-Kette nur geringfügig verändert. Die Verbindung wird auf der einen Seite des durch die disconnect-Anforderung betroffenen Pfades unterbrochen, während die andere Seite des Pfades in der Pfad-Kette der path envelope verbleibt. Die an das Koordinierungssystem zurückgegebene path envelope enthält die neue Pfadkonfiguration.

Das Koordinierungssystem wählt die geeignete Anforderung aufgrund seiner internen Daten aus. Beispielsweise benutzt das Koordinierungssystem eine release-Anforderung zur Beendigung eines Calls. Im Falle von Rekonfigurationen, z.B. wenn ein feature-Koordinierungsmodul die Kontrolle über einen aktiven port anfordert, um eine Ansage bereitzustellen, ist es am sinnvollsten, eine disconnect-Anforderung an das Switching-Control-System zu stellen, da der alte Verbindungszustand sicherlich wieder hergestellt werden wird, sobald die Ansage beendet ist.

Bei einer disconnect-Anforderung muß das Koordinierungssystem zusätzlich den Unterbrechungspunkt angeben. Der Unterbrechungspunkt wird dabei so gewählt, daß er die bestehende Konfiguration möglichst wenig verändert. Aus diesem Grund wird der Unterbrechungspunkt möglichst immer auf diejenige Verbindungsseite gelegt, über deren aktiven port das zugehörige feature-Koordinierungsmodul die Kontrolle anfordert. Wenn z.B. ein feature-Koordinierungsmodul der A-Verbindungsseite die Kontrolle über seinen entsprechenden port anfordert, ist es wahrscheinlicher, daß die angeforderte Ressource ebenfalls auf der Teilnehmereinheit der A-Verbindungsseite verfügbar ist. Deshalb ist die erste Präferenz für die Zuweisung einer Ressource immer die eigene Teilnehmereinheit, während in zweiter Präferenz ein gemeinsamer Ressourcenpool an der Hauptkoppeleinrichtung herangezogen wird. Die verbleibende Pfad-Kette, die nach Ausführung einer disconnect-Anforderung von der A-Verbindungsseite in der path envelope abgespeichert wird, ist in FIG 4 dargestellt.

Für die Realisation der disconnect-Funktion wird nur der angeforderte aktive port über die Koordinierungsmodul-Kette des Koordinierungssystems weitergereicht (d.h. unter den Koordinierungsmoduln des Koordinierungssystems werden keine solche Daten weitergereicht, die sich auf die zugeordnete Pfad-Kette beziehen). Daraus ergibt sich eine einfache Lösung für die Behandlung der path envelope innerhalb des Koordinierungssystems. Gemäß dieser Lösung wird immer genau eine path envelope einem Koordinierungsmodul fest zugeordnet. Die path envelope enthält Pfadsegmente, die der Verbindung durch das Switching-Control-System in Antwort auf eine Verbindungsanforderung selbst zugeordnet wurden.

Um in der Luft hängende Pfadressourcen (Pfadressourcen ohne Zuordnung zu einem aktiven port) zu vermeiden, müssen Pfadsegmente immer mit wenigstens einem aktiven port verknüpft sein. Deshalb muß jedes Mal, wenn ein Koordinierungsmodul die Kontrolle über einen aktiven port freigibt, dieses Koordinierungsmodul dafür sorgen, daß alle mit diesem port verknüpften Pfadsegmente durch eine entsprechende Anforderung an das Switching-Control-System abgebaut werden. Wenn das Koordinierungssystem eine disconnect-Anforderung bezüglich eines passiven ports, d.h. eines ports, der zu einer Ressource zugeordnet ist, abgibt, muß dafür gesorgt werden, daß die zugeordnete Ressource vom Switching-Control-System wieder freigegeben wird.

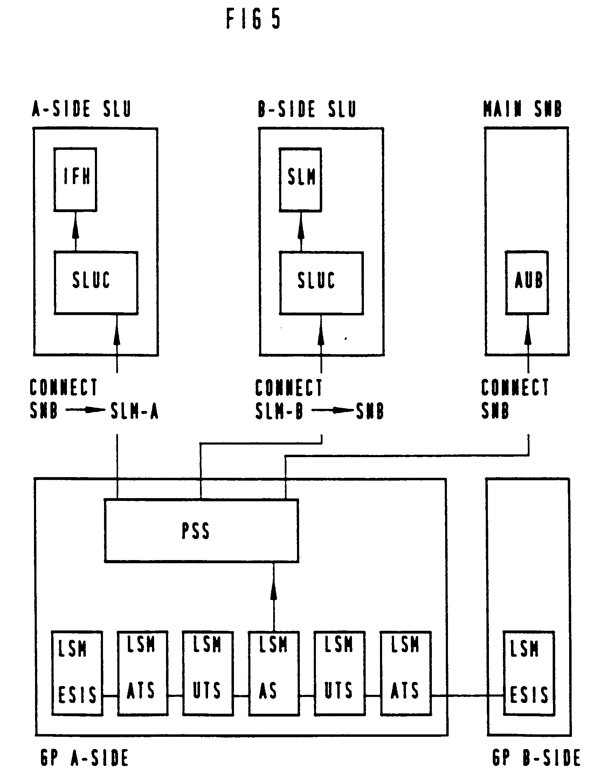

FIG 5 zeigt den Nachrichtenfluß bei einer einfachen Verbindungsanforderung des Koordinierungssystems an das Switching-Control-System. In FIG 5 ist die Teilnehmereinheit SLU_{B} im Unterschied zu FIG 1 eine entfernte Teilnehmereinheit. Dabei werden die folgenden Schritte durchgeführt:
In einem ersten Schritt übergibt das Segment AS die einfache Verbindungsanforderung mittels seines Koordinierungsmoduls LSM dem Switching-Control-System PSS.
In einem zweiten Schritt fordert das Switching-Control-System PSS die Teilnehmereinheitensteuerungen SLUC der Teilnehmer A und B auf, geeignete Pfade zur Hauptkoppeleinrichtung SNB bereitzustellen.
Daraufhin führen die beiden Teilnehmereinheitensteuerungen eine entsprechende Pfadsuche durch ihre lokale Koppeleinrichtungen durch und wählen entsprechende Links zur Hauptkoppeleinrichtungen aus. Die Teilnehmereinheitensteuerung SLUC des Teilnehmers A bestimmt also einen entsprechenden Link, eine entsprechende VCI-Kennung und routing-Kennung, sendet die routing-Kennungen zu dem Teilnehmermodul SLM und gibt den entsprechenden Link und die entsprechende VCI-Kennung zu demjenigen Steuerungsprozessor GP, der das auffordernde Switching-Control-System beinhaltet, zurück.
Die Teilnehmereinheitensteuerung des Teilnehmers B bestimmt ebenfalls den Link, die VCI-Kennung und routing-Kennung, sendet die routing-Kennung zur Schnittstelleneinheit IFH und gibt den bestimmten Link und die bestimmte VCI-Kennung anschließend dem genannten Steuerungsprozessor GP zurück. In einem vierten Schritt bestimmt das PSS des genannten Steuerungsprozessors GP die routing-Kennung für die Hauptkoppeleinrichtung SNB und sendet diese zur Zugangseinrichtung AUB der Hauptkoppeleinrichtung.

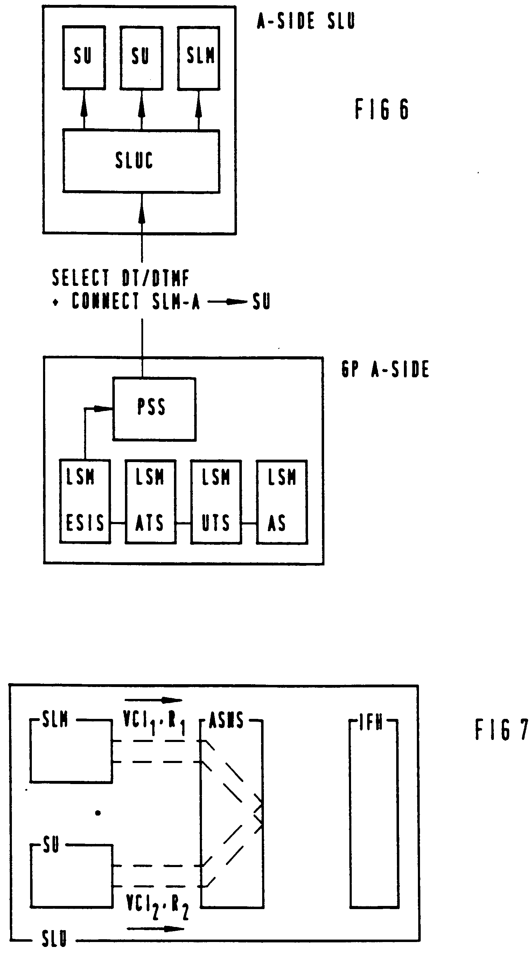

FIG 6 zeigt den Nachrichtenfluß bei einer kombinierten Verbindungsanforderung. Die in FIG. 6 betrachtete kombinierte Verbindungsanforderung lautet: Wähle einen freien DTMF-Empfänger und Wählton aus und verbinde sie mit einem bestimmten Teilnehmer. Wenn eine in der kombinierten Verbindungsanforderung angegebene Ressource (z.B. der DTMF-Empfänger) in mehreren Pools verfügbar ist, so bestimmt der Steuerprozessor GP den bevorzugten Pool, aus dem die Ressource entnommen wird. Die Frei/Belegt-Behandlung für die Ressource selbst wird im Falle eines lokalen Pools (Service-Einheit SU einer Teilnehmereinheit SLU) durch die Teilnehmereinheitensteuerung SLUC bewerkstelligt oder im Falle eines zentralen Pools durch den Steuerungsprozessor GP.

Im folgenden werden die einzelnen Schritte der kombinierten Verbindungsanforderung angegeben:
In einem ersten Schritt bestimmt der Steuerungsprozessor GP den Ressourcen-Pool, aus dem die in der Verbindungsanforderung spezifizierten Ressourcen, nämlich der DTMF-Empfänger und der Wählton ausgewählt werden. Im vorliegenden Fall wird ein lokaler Ressourcen-Pool ausgewählt, nämlich der Pool der Teilnehmereinheit SLU des die Verbindungsanforderung auslösenden Teilnehmers.
In einem zweiten Schritt fordert der Steuerprozessor GP die Teilnehmereinheitensteuerung SLUC auf, die genannten Ressourcen aus geeigneten Service-Einheiten SU auszuwählen und sodann mit dem Teilnehmer zu verbinden.
In einem dritten Schritt durchsucht die Teilnehmereinheitensteuerung ihre Frei/Belegt-Tabellen und weist der Verbindungsanforderung die genannten Ressourcen aus den geeigneten Service-Einheiten SU zu, um so den angeforderten Service bereitzustellen. Die Teilnehmereinheitensteuerung aktiviert sodann die genannten Ressourcen, bestimmt eine erste routing-Kennung R1 und eine zweite routing-Kennung R2 und sendet sodann die erste routing-Kennung zu dem Teilnehmermodul SLM (DTMF-Empfänger) und die zweite routing-Kennung zu der Service-Einheit SU des Wähltons, wie in FIG 7 erkennbar. Schließlich übergibt die Teilnehmereinheitensteuerung die Kennungen der zugewiesenen Service-Einheiten SU dem Steuerprozessor GP als Verbindungsdaten für spätere Verbindungssteuerungsvorgänge.

FIG 7 zeigt den durch die Nachrichtenflüsse von FIG 6 aufgebauten Pfad der Verbindung.

## Patentansprüche

1. Switching-Control-System (PSS) zur Steuerung der physikalischen Verbindungsstrukturen in einem Vermittlungssystem, das folgende Merkmale umfaßt:
a) Mittel zum Empfang von Verbindungsanforderungen von wenigstens einem Anwendersystem (CCS, ITP, SIG), wobei das Anwendersystem der Steuerung der logischen Verbindungsstrukturen dient und eine Verbindungsanforderung Kennungen der von ihr betroffenen Verbindungsendpunkte beinhaltet,
b) Mittel zur Bearbeitung der genannten Verbindungsanforderungen, die auf Grund einer Verbindungsanforderung einen physikalischen Pfad durch die Koppeleinrichtungen des Vermittlungssystems berechnen,
c) Mittel zum Senden von Aufträgen an Ressourcensysteme (RHS) zur lokalen Steuerung der von dem berechneten physikalischen Pfad betroffenen Ressourcen.

2. Switching-Control-System gemäß Anspruch 1,
**dadurch gekennzeichnet**,
daß die Mittel zur Bearbeitung der Verbindungsanforderungen von einem Anwendersystem empfangene Verbindungsanforderungen voneinander unabhängig bearbeiten.

3. Switching-Control-System gemäß Anspruch 1 oder 2,
**gekennzeichnet durch**
Mittel zur Übergabe der Daten des von den Ressourcensystemen eingestellten physikalischen Pfades an das die Verbindungsanforderung stellende Anwendersystem.

4. Vermittlungssystem, das folgende Merkmale umfaßt:
a) wenigstens einen Steuerungsprozessor (GP) zur Ausführung zentraler Steuerungsvorgänge,
b) wenigstens ein Anwendersystem (CCS, ITP, SIG) pro Steuerungsprozessor (GP) zur zentralen Steuerung der logischen Verbindungsstrukturen,
c) lokale Ressourcensysteme (RHS) zur lokalen Steuerung der Ressourcen des Vermittlungssystems,
**gekennzeichnet durch**
d) genau ein Switching-Control-System (PSS) pro Steuerungsprozessor (GP) zur zentralen Steuerung der physikalischen Verbindungsstrukturen in dem Vermittlungssystem, das folgende Merkmale umfaßt:
d1) Mittel zum Empfang von Verbindungsanforderungen von einem Anwendersystem (CCS, ITP, SIG), wobei eine Verbindungsforderung Kennungen der von ihr betroffenen Verbindungsendpunkte beinhaltet,
d2) Mittel zur Bearbeitung der genannten Verbindungsanforderungen, die auf Grund einer Verbindungsanforderung einen physikalischen Pfad durch die Koppeleinrichtung des Vermittlungssystems berechnen,
d3) Mittel zum Senden von Aufträgen an lokale Ressourcensysteme (RHS) zur lokalen Steuerung der von dem berechneten physikalischen Pfad betroffenen Ressourcen.

5. Vermittlungssystem gemäß Anspruch 4,
**dadurch gekennzeichnet**,
daß
a) ein Anwendersystem (CCS, ITP, SIG) aus mehreren Segmenten aufgebaut ist,
b) jedes Segment eine Teilfunktion der logischen Verbindungssteuerung selbständig durchführt.

6. Vermittlungssystem gemäß Anspruch 5,
**dadurch gekennzeichnet**,
daß
a) pro Verbindung eine Kette von Instanzen der benötigten Segmente aufgebaut wird,
b) mehrere Instanzen der genanntene Kette in der Lage sind, voneinander unabhängig erzeugte Verbindungsanforderungen an das Switching-Control-System (PSS) zu stellen,
c) die genannte Kette einer Verbindung sich über mehrere Steuerungsprozessoren (GP) erstrecken kann.

7. Vermittlungssystem gemäß Anspruch 6,
**dadurch gekennzeichnet**,
daß das genannte Anwender-System ein Koordinierungssystem (LSS) enthält, das die genannten Verbindungsanforderungen gegenüber dem Switching-Control-System (PSS) in der Weise koordiniert, daß zu einer bestimmten Zeit jeweils nur eine konsistente Verbindungsanforderung pro Verbindung vom Switching-Control-System (PSS) behandelt wird.

## Claims

1. Switching control system (PSS) for controlling the physical connection structures in a switching system, which comprises the following features:
a) means for receiving connection requests from at least one user system (CCS, ITP, SIG), the user system being used to control the logic connection structures, and a connection request containing identifiers for the connection end points affected by it,
b) means for processing the said connection requests, which means calculate a physical path through the switching networks of the switching system on the basis of a connection request,
c) means for transmitting commands to resource systems (RHS) for local control of the resources which are affected by the calculated physical path.

2. Switching control system according to Claim 1,
characterized
in that the means for processing the connection requests from a user system process received connection requests independently of one another.

3. Switching control system according to Claim 1 or 2,
characterized by
means for transferring the data of the physical path which is set by the resource systems to the user system which submits the connection request.

4. Switching system which comprises the following features:
a) at least one control processor (GP) for carrying out central control processes,
b) at least one user system (CCS, ITP, SIG) per control processor (GP) for central control of the logic connection structures,
c) local resource systems (RHS) for local control of the resources of the switching system,
characterized by
d) one and only one switching control system (PSS) per control processor (GP) for central control of the physical connection structures in the switching system, which comprises the following features:
d1) means for receiving connection requests from a user system (CCS, ITP, SIG), a connection request containing identifiers for the connection end points affected by it,
d2) means for processing the said connection requests, which means calculate a physical path through the switching network of the switching system on the basis of a connection request,
d3) means for transmitting commands to local resource systems (RHS) for local control of the resources which are affected by the calculated physical path.

5. Switching system according to Claim 4,
characterized
in that
a) a user system (CCS, ITP, SIG) is built up from a plurality of segments,
b) each segment autonomously carries out a subfunction of the logic connection controller.

6. Switching system according to Claim 5,
characterized
in that
a) one chain of entities of the required segments is built up per connection,
b) a plurality of entities of the said chain are able to submit mutually independently produced connection requests to the switching control system (PSS),
c) the said chain of a connection can extend over a plurality of control processors (GP).

7. Switching system according to Claim 6,
characterized
in that the said user system includes a coordination system (LSS) which coordinates the said connection requests with respect to the switching control system (PSS) in such a manner that, at a specific time, only one consistent connection request is in each case dealt with per connection by the switching control system (PSS).

## Revendications

1. Système de commande de commutation (PSS) pour la commande des structures de liaisons physiques dans un système de commutation, lequel système de commande de commutation a les caractéristiques suivantes :
a) des moyens qui sont destinés à la réception de demandes de liaisons provenant d'au moins un système d'application (CCS, ITP, SIG), le système d'application servant à la commande des structures de liaisons logiques et une demande de liaison contenant des identificateurs des extrémités de liaisons concernées par cette demande de liaison,
b) des moyens qui sont destinés au traitement des demandes de liaisons mentionnées et qui calculent en raison d'une demande de liaison un chemin physique à travers les réseaux de connexion du système de commutation,
c) des moyens pour l'envoi de tâches à des systèmes de ressources (RHS) pour la commande locale des ressources concernées par le chemin physique calculé.

2. Système de commande de commutation selon la revendication 1,
caractérisé par le fait que les moyens pour le traitement des demandes de liaisons traitent indépendamment les unes des autres des demandes de liaisons reçues d'un système d'application.

3. Système de commande de commutation selon la revendication 1 ou 2,
caractérisé par des moyens pour la retransmission des données du chemin physique, réglé par les systèmes de ressources, au système d'application demandant la liaison.

4. Système de commutation ayant les caractéristiques suivantes :
a) au moins un processeur de commande (GP) pour la mise en oeuvre d'opérations de commande centrales,
b) au moins un système d'application (CCS, ITP, SIG) par processeur de commande (GP) pour la commande centrale des structures de liaisons logiques,
c) des systèmes de ressources locaux (RHS) pour la commande locale des ressources du système de commutation,
caractérisé par
d) exactement un système de commande de commutation (PSS) par processeur de commande (GP) pour la commande locale des structures de liaisons physiques dans le système de commutation, lequel système de commande de commutation a les caractéristiques suivantes :
d1) des moyens qui sont destinés à la réception de demandes de liaisons provenant d'un système d'application (CCS, ITP, SIG), une demande de liaison contenant des identificateurs des extrémités de liaisons concernées par cette demande de liaison,
d2) des moyens qui sont destinés au traitement des demandes de liaisons mentionnées et qui calculent en raison d'une demande de liaison un chemin physique à travers le réseau de connexion du système de commutation,
d3) des moyens pour l'envoi de tâches à des systèmes de ressources locaux (RHS) pour la commande locale des ressources concernées par le chemin physique calculé.

5. Système de commutation selon la revendication 4,
caractérisé par le fait que
a) un système d'application (CCS, ITP, SIG) est constitué de plusieurs segments,
b) chaque segment met en oeuvre de manière autonome une fonction partielle de la commande de liaison logique.

6. Système de commutation selon la revendication 5,
caractérisé par le fait que
a) une chaîne d'instances des segments nécessaires est établie pour chaque liaison,
b) plusieurs instances de la chaîne mentionnée sont capables d'envoyer au système de commande de commutation (PSS) des demandes de liaisons produites indépendamment les unes des autres,
c) la chaîne mentionnée d'une liaison peut s'étendre sur plusieurs processeurs de commande (GP).

7. Système de commutation selon la revendication 6,
caractérisé par le fait que le système d'application mentionné contient un système de coordination (LSS) qui coordonne les demandes de liaisons mentionnées par rapport au système de commande de commutation (PSS) de telle sorte que, à un instant donné, à chaque fois une seule demande de liaison consistante par liaison est traitée par le système de commande de commutation (PSS).
